# EUROPEAN PATENT SPECIFICATION

(11) **EP 1 451 037 B1**
(45) Date of publication and mention of the grant of the patent: **07.01.2009**
(21) Application number: 02778176.4
(22) Date of filing: 15.11.2002
(51) Int. Cl.: B60P 7/13

(54) **DEVICE AT A CARGO SUPPORT**
VORRICHTUNG AN EINER LADUNGSSTÜTZEINRICHTUNG
SUPPORT A L'ARRIMAGE DE CARGAISON

(30) Priority: 16.11.2001 SE 0103829
(43) Date of publication of application: 01.09.2004
(73) Proprietor: TTS Ships Equipment AB, 411 04 Göteborg (SE)
(72) Inventor: DAHLSTRÖM, Kurt, Deceased (SE)
(74) Representative: Cederbom, Hans Erik August
(86) International application number: PCT/SE2002/002076
(87) International publication number: WO 2003/053736

(56) References cited:
- NO-B- 153 091
- SE-B- 419 072
- SE-B- 446 330
- US-A- 2 543 295
- US-A- 5 570 981
- US-A- 5 613 814

## Description

The present invention relates to an arrangement for a cargo support for trailers comprising connecting means for the detachable attachment of the cargo support to a cargo vehicle and a trailer of the kind in question, and means are also provided for the detachable locking of the cargo support to the deck of a vessel, in conjunction with which openings in the cargo deck are provided to accommodate locking devices that are arranged in the cargo support in question and are capable of actuation causing them to be displaced from locking engagement with the deck.

When trailers are transported on Ro-Ro vessels, they must always as a rule be securely lashed to the deck in such a way that they are unable to move even in heavy seas. The accelerations to which the load is subjected can exceed 8 m/s², and the lashing means must accordingly be capable of withstanding forces that are of the same order of magnitude as the weight of the cargo.

Handling of trailers in a port area usually takes place in such a way that the tractor vehicles leave them at and collect them from specially designated parking areas. From here they are towed on board by special cargo handling vehicles, known as tugmasters. The same tugmasters remove trailers from the ship and take them to the parking area for shipping.

Trailers are provided with vertically adjustable support legs, on which they stand on the quay. However, these support legs are only designed to carry the vertical load represented by the trailer's own weight.

The support legs of the trailer are thus unable to carry the loads which arise laterally and longitudinally as the vessel pitches and rolls. This is why it is necessary, when the trailer is on board, to support it with a cargo support in the form of a separate stand. The aforementioned stand has sufficient strength longitudinally and transversely. Previously disclosed technology for trailer stands is as described below:
CONVENTIONAL TRAILER STAND. This cargo support is the original and, until now, the most common stand. It is always on board, and in principle it never leaves the ship.

Handling with such stands requires the tugmaster to drive a trailer on board, after which one or two men manually pull out a stand and introduce it under the trailer, behind the tugmaster. The trailer is then lowered so that it is supported on the stand. The tugmaster can then be disconnected and driven away. The trailer is thus not attached to the stand, but is only supported on it. The trailer is then lashed to the deck in accordance with the rules compiled for the respective vessel and sea route.

This system nevertheless requires space to be available for stands on board, and for the stands to be stowed manually so that they do not obstruct the traffic during loading and unloading. It is also necessary for personnel and one stand to be ready at all times when the tugmaster arrives, if it is not to be kept waiting.

TRAILER STAND OF THE TOTE-LINE TYPE. This stand is hooked securely to the king-pin of the trailer. The handling system is such that the stands can be "pre-loaded" on the trailers in their parking areas ashore, that is to say before the vessel arrives in the port.

The tugmaster is thus able to deliver the trailer without the need for any personnel to be present in the immediate vicinity.

A certain amount of space must be provided on board, however, for unused stands. It is rarely the case that the number of trailers brought ashore corresponds precisely to the number to be shipped out. In this case, the tugmaster is connected to the stand in question.

### TRAILER STAND WITH REMOTELY CONTROLLED LOCKING

DEVICE. This stand exhibits an inverted U-shaped profile and is provided with locking devices capable of being locked to the deck of the vessel in locking recesses.

Actuation of the aforementioned locking devices is performed from the cargo vehicle, and this involves complicated locking of the mechanism and transfer of the actuating movement.

The principal object of the present invention is thus, in the first instance, to solve the aforementioned problems and to obtain cargo supports which, on the whole, function of their own accord without the need for additional complicated locking arrangements.

The aforementioned object is achieved by means of an arrangement in accordance with the present invention, which is characterized essentially in that the aforementioned locking devices are so arranged as to be activated and disconnected respectively through interaction between the cargo vehicle and the cargo support.

An arrangement executed in accordance with the invention constitutes a trailer stand with locking flaps. This support stand can also be pre-loaded on trailers before the arrival of the vessel. The tugmaster collects a stand and introduces it under the trailer, in conjunction with which it is locked automatically to the trailer's king-pin.

The tugmaster drives on board and manoeuvres the trailer so that the legs of the stand are set down above the openings for secure locking that are provided in the deck. The locking flaps then engage of their own accord in the locking position. When the tugmaster subsequently disengages and drives away, the actual locking takes place automatically by means of a locking bar falling down between the locking flaps in such a way that they are prevented from moving.

This is effected by an operating arm on the stand being actuated by one or other part of the tugmaster, for example the turntable of the tugmaster. This actuating mechanism retains the locking bar in an upper, releasing position for as long as the tugmaster is connected to the stand. When the tugmaster is not connected to the stand, the bar drops down and locks. Both locking to the deck and releasing from the deck thus take place entirely automatically.

The invention is described below with reference to the accompanying drawings, in which
Fig. 1 shows a trailer and a tractor vehicle during a connection phase;
Figs. 2-4 show the connection phase in greater detail viewed from the side of the tractor vehicle and the trailer and from its inside;

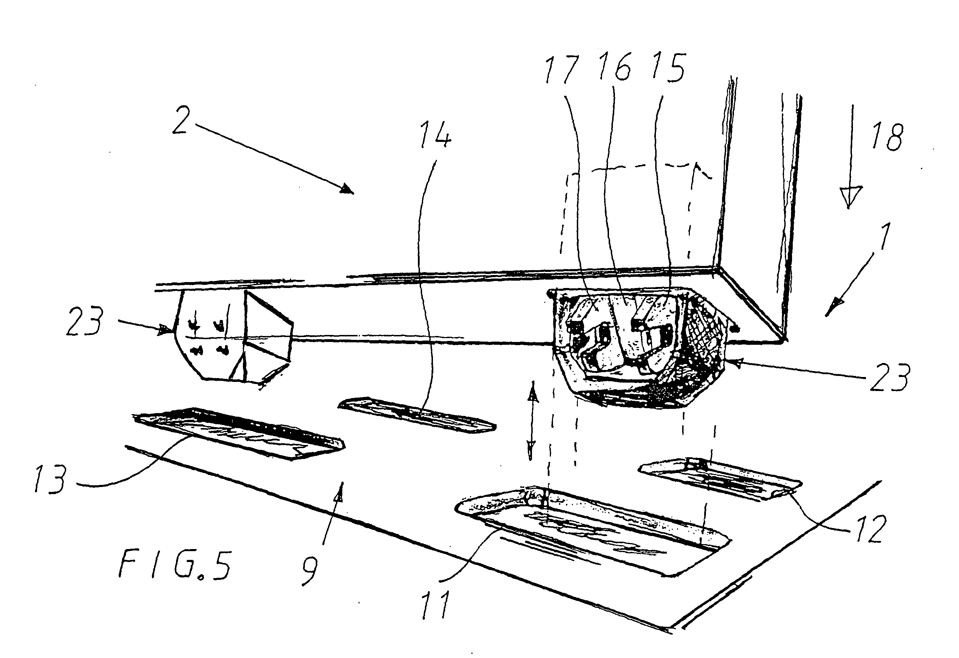

Fig. 5 shows a perspective view of the connection phase of a cargo support to the locking openings in the deck of a vessel;
Fig. 6 shows a sectioned view of the inside of a cargo stand during the lowering phase of the cargo support;
Fig. 7 shows a sectioned view of the inside of the aforementioned cargo support during the raising phase of the actual cargo support;

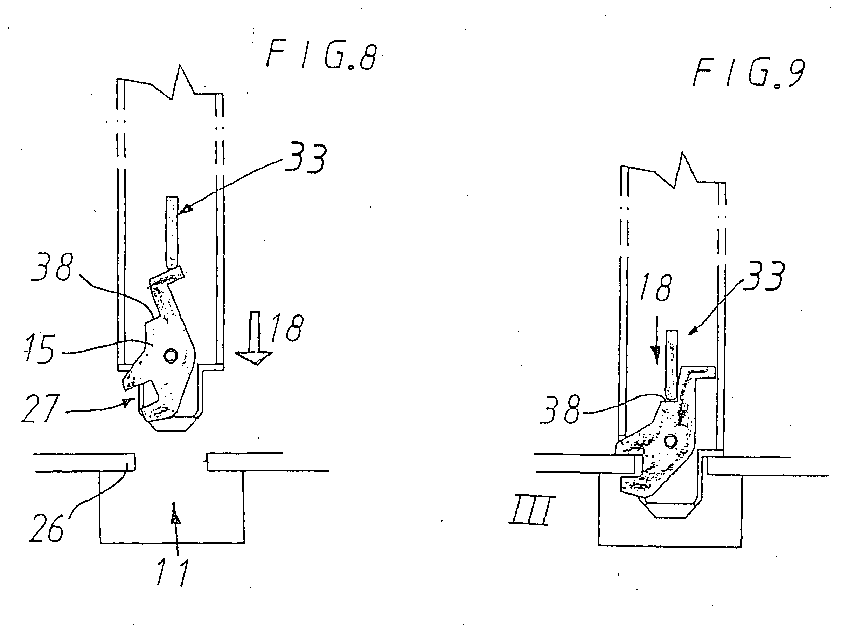

Figs. 8 and 9 show the interaction of a locking bar with the locking devices in the cargo support;
Fig. 10 shows the cargo support in the lowered and raised position;
Figs. 11-12 show a further illustrative embodiment of the invention, in conjunction with which

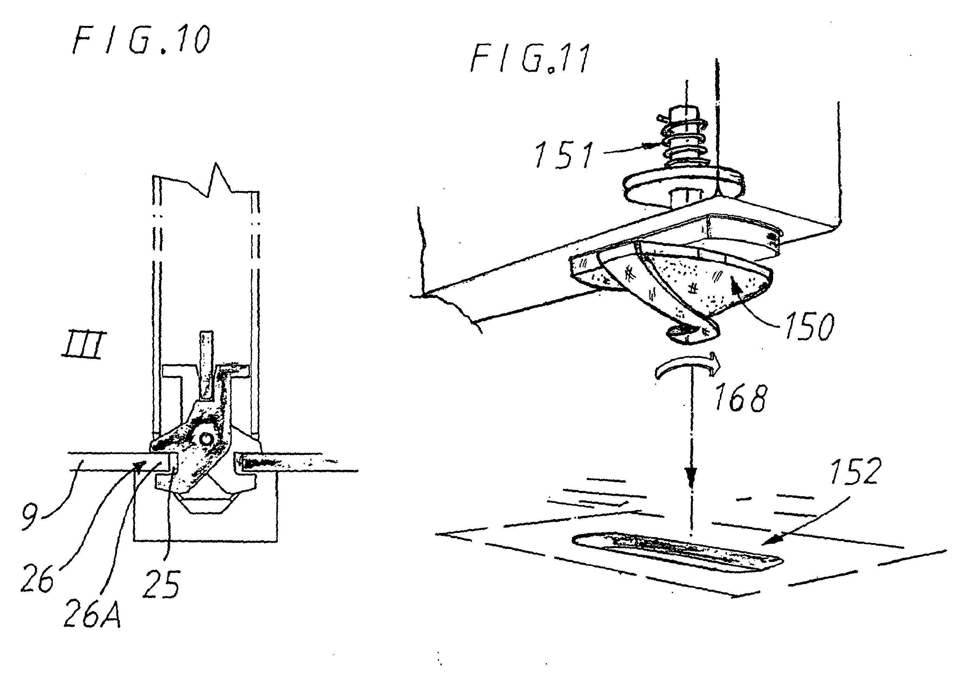

Fig. 11 shows a rotatable locking device viewed at an angle from below; and

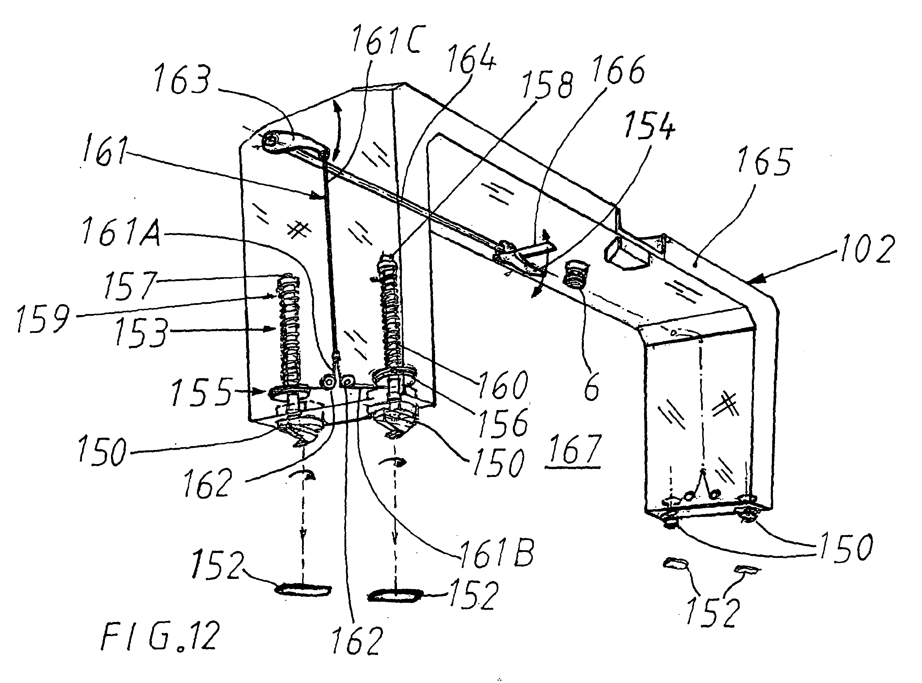

Fig. 12 shows a perspective view seen at an angle from below of a cargo support in the raised position above openings capable of accommodating a locking device.

An arrangement 1 for a cargo support 2, which is executed as a stand and is intended to be used to support the front part 3A of a trailer 3 and comprises connecting means 4, 5, 6, 7 for the achievement of detachable attachment of the cargo support 2 to a cargo vehicle 8 and a trailer 3 of the kind in question and with means for the detachable locking of the cargo support to the deck 9 of a vessel, exhibits openings 11-14 in the cargo deck 9 arranged for the accommodation of locking devices 15, 16, 17 that are arranged in the cargo support 2 in question and are capable of actuation causing them to be displaced from locked engagement with the deck 9 of the vessel, comprises means such that the aforementioned locking devices 15-17 are so arranged as to be activated I and disconnected II automatically through interaction between the cargo vehicle 8 and the cargo support 2.

The aforementioned locking devices 15-17 are so arranged that, by lowering in a direction towards 18 and by setting down the cargo support 2 onto the deck 9 of the vessel, they are caused automatically to come into locking engagement III with associated subjacent lock accommodating openings 11-14, and that, in conjunction with the application of a lifting effect on the cargo support by means of the cargo support 2 and its associated lifting arm 19 with a connecting disc 7, they are caused to come out of engagement from locking interaction with associated subjacent lock accommodating openings 11-14.

The forces which an aforementioned trailer support stand 2 shall be capable of supporting are considerable, and the stand 2 shall be capable of absorbing forces of the order of 0.3 G in the fore-and-aft direction.

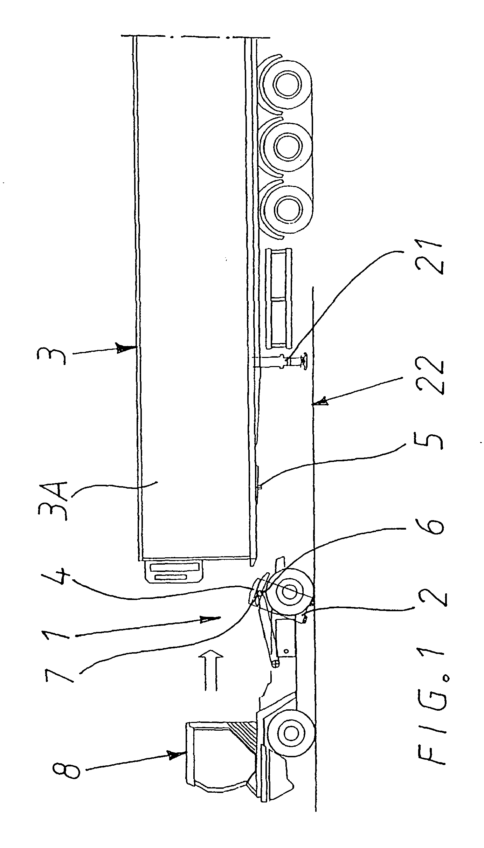

For the connection of a trailer 3 that is parked on its front support legs 21 on a base 22, a cargo vehicle 8 of the kind in question in the form of a so-called tugmaster can cause a cargo support 2 to be driven to the trailer 3 in the area beneath its so-called king-pin 5. Different trailers can have different clearances beneath the trailer, depending on the type and depending on the height to which the driver has cranked up the trailer when leaving it. In many cases the height is so low that the tugmaster is obliged to angle the cargo stand as shown in Fig. 1. In this case the legs of the trailer stand will drag along the ground, and there is a risk of damage to the locking mechanism.

It is necessary for the cargo support 2 to be stable and to be capable of withstanding severe shocks. The cargo support 2 accordingly exhibits four pin-like strong bottom corner parts 23 tapering in the downward 18 direction and of matching shape to the lock openings 11-14 in question situated in the deck. Each bottom corner part 23 comprises a suitable number of locking devices 15-17, each of which is formed by a jaw 25 pivotally mounted about a horizontal bearing shaft 24 in order to obtain locking interaction with a lock stop 26 in the aforementioned lock accommodating openings 11-14, more specifically so that the locking device 15-17 is formed by a recess 27 adapted to accommodate one edge 26A of an aforementioned lock stop 26, which extends along the respective lock accommodating opening 11-14.

The aforementioned locking devices 15-17 are so arranged as to be actuated jointly by a separate internal frame 29 capable of displacement relative to the outer supporting part 28 of the cargo support. The aforementioned moving frame 29 is in turn capable of actuation by, for example, the connecting disc 7 or some other part of a cargo vehicle 8 when a cargo vehicle 8 of the kind in question intended for connection passes, for example, through the aforementioned cargo support.

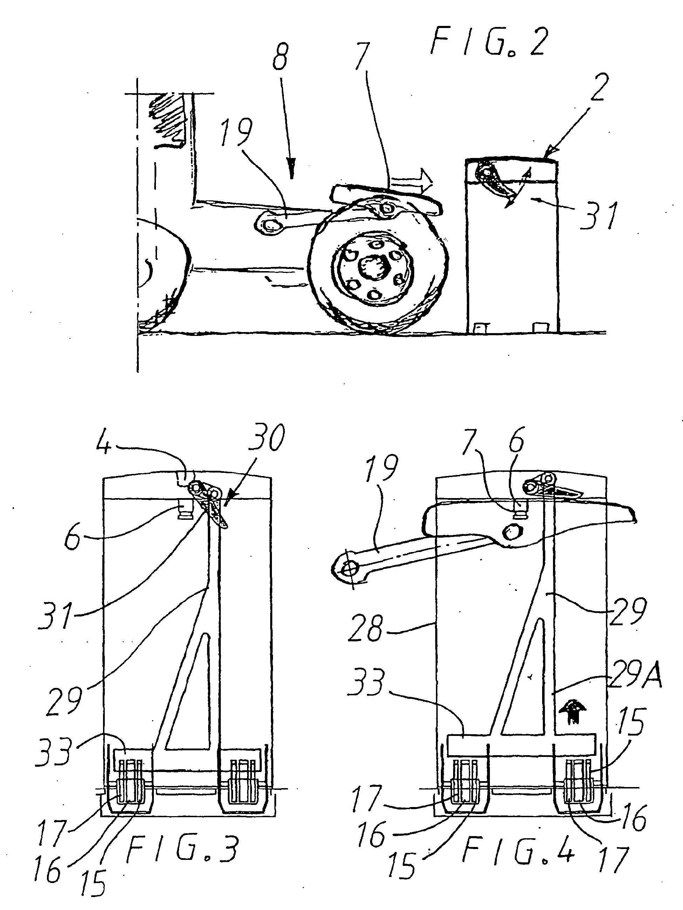

As illustrated in the drawings in Figs. 2-4, a mechanism 30 which comprises an articulated link between the aforementioned frame 29 and a pivotally supported pivot arm 31 capable of actuation can be so arranged as to transmit movement from the cargo vehicle 8 to the aforementioned frame 29 after actuation by means of, for example, its connecting disc, etc., 7. In the aforementioned actuating position, when the cargo vehicle 8 is close to the cargo support 2 and these are connected to one another, the frame 29 is held in a raised position away from the locking devices 15-18.

It is also possible by means of a lifting tool, for example with a simple lifting rod, for example a crowbar, to raise the aforementioned frame 29 manually in a direction away from 32 the deck 9 of the vessel if the need arises.

The aforementioned frame 29 forms a transverse horizontal bar 33 at its lower end 29A for the purpose of enabling it to be locked together with the bar through the effect of the own weight of the frame.

The number of locking devices 15-17 can be varied, but it is expedient to arrange two or three locking devices accommodated in the respective bottom corner part 23 and facing one another when viewed from the side.

In accordance with a further illustrative embodiment, which is shown in Figs. 11-12, the aforementioned locking devices 150 are so arranged as to be capable of actuation by spring force 151 causing them to be displaced into locked engagement with associated subjacent lock accommodating openings 152 of matching form with the help of a spring mechanism 153. The aforementioned spring mechanism 153 is capable of activation when a cargo vehicle in question passes the mechanism and actuates a catch 154 and the aforementioned locking devices 150 are so arranged as to be released when the cargo vehicle in question once more comes into position beneath the cargo support 102.

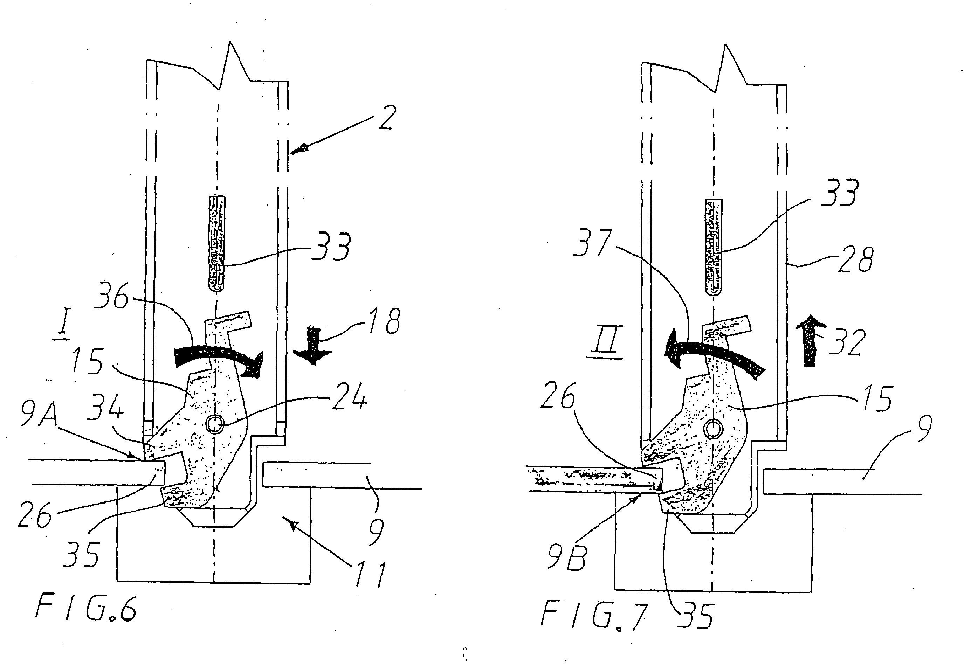

The principle of the first-mentioned illustrative embodiment of the arrangement in accordance with the invention respectively for opening and closing the locking function of the cargo support may be simplified as follows:
When the stand is set down, the upper claw 34 of the respective locking device 15-17 engages with the upper side 9A of the deck 9, while the lower claw 35 is accommodated in it as a so-called lash pot, i.e. a lock recess executed as the lock accommodating opening 11-14 through and under the deck 9. The mechanism is caused in this way to rotate in the direction of the arrow 36 about the pivot axle 24, so that the jaw 25 in its entirety eventually grips around the edge of the hole in the deck or some other functioning lock stop 26 in the respective lock accommodating opening 11-14 for each group of lock devices 15-17. Use is made for this purpose of the weight of the trailer 3 supported above the cargo support 2 as a help in conjunction with locking. Fig. 6 shows this clearly.

When the cargo vehicle 8 has again driven up to the cargo support 2 and raises it, the lower claw 35 takes hold of the under side 9B of the deck plate 9 and forces the mechanism to open by degrees, and when the locking device 15-17 has rotated in the direction of the arrow 37 as far as its end position, the cargo support 2 is free to be raised from the deck 9. In conjunction with this, the lifting power of the cargo vehicle 8 was used to unlock the mechanism.

The invention in accordance with the invention also exhibits the following functions:
The arrangement is forced into the open position II by the force with which the cargo vehicle 8 is able to lift the cargo support 2.

The arrangement is brought into the locking position I by the effect of gravity of the cargo support 2 and the part 3A of the trailer 3 resting on it.

The arrangement is locked in the locked position I by a bar 33, which falls down due to its own weight between the locking devices 15-17 and then rests against a stop 38 thereon once the cargo vehicle has been disconnected and has moved away from the parking position on board.

The aforementioned locking bar 33 is forced up into the releasing position by the cargo vehicle 8 when it is connected to the cargo support 2. An indicating flag or other signal can be connected to the locking bar 33 in order to be able to indicate from a distance when the locking bar 33 is in its lower locked position. The aforementioned indicating flag need not indicate when the locking bar 33 is in its raised disconnected position.

The aforementioned locking bar 33 can also be lifted up or pushed down manually from the outside, if the need arises, for example with the help of a crowbar or some other actuating means.

The attachment frame 29 of the locking arrangement is capable of displacement together with the bar 33 in the vertical sense in relation to other parts of the cargo support 2.

The attachment frame 29 of the locking arrangement is so arranged as to enclose the locking devices 15-17 in a direction from the front, from the rear and below so that it forms a guard for the locking devices 15-17.

The self-locking mechanism illustrated in Figs. 11-12 for locking each of the locking devices 150 to its own lock opening 152 of matching form functions in such a way that the locking devices 150 are capable of actuation when a cargo vehicle of the kind in question exits from the cargo support 102 in question or is removed in some other way from a mechanism 153 of the kind in question, and that the locking devices 150 are so arranged as to be disengaged when the cargo vehicle in question again reaches the mechanism 153 in the cargo support 102 in question. The mechanism 153 comprises pairs of pulley wheels 155, 156, each of which is supported by its own shaft 157, 158, on which assembled, combined compression and torsion springs 159, 160 sit. An aforementioned locking device 150 is connected to each of the shafts 157, 158 in such a way that they are capable of being rotated together. A cable 161 passes around each of the guide rollers 162 and continues to the aforementioned pulley wheels 155, 156 with its divided line ends 161A, 161B. The opposite end 161C of the cable 161 is attached to a lever arm 163 that is rigidly connected to a rotating shaft 164. This shaft 164 is rigidly attached to the actuatable catch 154, which is rotatably mounted internally in the upper horizontal frame 165 of the cargo support. The catch is capable of being rotated out through an opening 166 against the effect of a spring force exerted by the springs 159, 160 and is laterally displaced from the so-called kingpin of the cargo support, i.e. the connection 6 to which the connection 7 of the cargo vehicle 7 is connected.

The locking devices 150 are actuated, when in the locked position, by the springs 159, 160, which are arranged transversely as illustrated in Fig. 12, and each spring is thus accommodated in a recess 152 of matching form, as illustrated in Fig. 11, securely retained at a mutual distance from one another in the interests of clarity.

After spring-assisted actuation of the engagement arm 154 that is capable of rotating together with the shaft 164, after the vehicle has exited from the space 167 under the cargo support 102, the locking devices 150 are caused to rotate in the direction of the arrow 168 until these arrive in a position in which they can be drawn up out of the associated recess 152, i.e. ca. 90° from the locked position.

The locking function is thus achieved through the movement of the cargo vehicle and actuation of the cargo support, in conjunction with which the assembly as a whole is brought into the locked position by the cargo vehicle, and is also opened after actuation by the cargo vehicle.

The invention is naturally not restricted to the embodiments described above and illustrated in the accompanying drawings. Modifications are possible, in particular in respect of the nature of the different component parts, or by the use of equivalent technology, without departing from the area of protection afforded to the invention, as defined in the Patent Claims.

## Claims

1. Cargo support (2, 102) for a trailer (3) comprising connecting means (4, 6) for detachable attachment of the cargo support (2, 102) to a cargo vehicle (8) and to the trailer (3), and locking devices (15, 16, 17, 150) for detachable locking of the cargo support in lock accommodating openings (11, 12, 13, 14, 152) which are provided in the cargo deck (9) of a vessel, **characterized in that** the locking devices (15, 16, 17, 150) are so arranged as to come into and out of locking engagement with the cargo deck (9) respectively through interaction between the cargo vehicle (8) and the cargo support (2, 102).

2. Cargo support (2) according to claim 1, **characterized in that** the locking devices (15, 16, 17) are arranged such that by lowering in a direction (18) towards and by setting down the cargo support (2) onto the cargo deck (9), they are caused automatically to come into locking engagement with an associated subjacent lock accommodating opening (11), and that, in conjunction with the application of a lifting effect on the cargo support (2), they come out of engagement from the locking engagement with the associated subjacent lock accommodating opening (11).

3. Cargo support (2) according to claim 2, **characterized in that** the locking devices (15, 16, 17) are formed by pivotally mounted jaws (25) in order to obtain locking engagement with a lock stop (26) extending around the associated subjacent lock accommodating opening (11).

4. Cargo support (2) according to claim 3, **characterized in that** the each jaw (25) comprises a recess (27) adapted to accommodate one edge (26A) of the lock stop (26).

5. Cargo support (2) according to one of the claims 2 to 4, **characterized in that** it comprises a frame (29) and an outer supporting part (28), the frame (29) being separately moveable relative to the outer supporting part (28) for jointly locking the locking devices (15, 16, 17) in the locked position, and in turn being so arranged as to be capable of being actuated by a connecting disc (7) or some other part of the cargo vehicle (8) when the cargo vehicle (8) passes in under the cargo support (2).

6. Cargo support (2) according to claim 5, **characterized in that** the frame (29) is so arranged as to be capable of being actuated manually by means of a lifting tool, for example a lifting arm in the form of a crowbar, to raise it in a direction (32) away from the cargo deck (9).

7. Cargo support (2) according to claims 5 or 6, **characterized in that** the frame (29) comprises a bar (33) for jointly locking the locking devices (15, 16, 17) in the locked position.

8. Cargo support (2) according to one of claims 5 to 7, **characterized in that** it exhibits pin-like bottom corner parts (23) being tapered in the downward (18) direction and matching the lock accommodating openings (11, 12, 13, 14).

9. Cargo support according to claim 8, **characterized in that** the locking devices (15, 16, 17) are arranged mutually opposing in each bottom corner part (23).

10. Cargo support (2) according to claim 1, **characterized in that** it comprises a spring mechanism (153) for activating the locking devices (150) by spring force (151) into locked engagement with associated subjacent lock accommodating openings (152), when actuated, ad disconnecting the locking devices from locking engagement when released, the spring mechanism in turn being so arranged as to be capable of being actuated by a connecting disc (7) or some other part of the cargo vehicle (8) when the cargo vehicle moves out from the cargo support (102) or is removed from the spring mechanism (153) in some other way, and as to be released when the cargo vehicle reaches the spring mechanism (153) in the cargo support (102).

## Patentansprüche

1. Ladungsstützeinrichtung (2, 102) für einen Anhänger (3), umfassend:
Verbindungseinrichtungen (4, 6) zur lösbaren Befestigung der Ladungsstützeinrichtung (2, 102) an einem Nutzfahrzeug (8) und an dem Anhänger (3), und
Verriegelungsvorrichtungen (15, 16, 17, 150) zur lösbaren Verriegelung der Ladungsstützeinrichtung in Verriegelungsaufnahmeöffnungen (11, 12, 13, 14, 152), die im Ladungsdeck (9) eines Schiffes vorgesehen sind,
**dadurch gekennzeichnet, dass** die Verriegelungsvorrichtungen (15, 16, 17, 150) so angeordnet sind, um mit dem Ladungsdeck (9) durch Wechselwirkung zwischen dem Nutzfahrzeug (8) und der Ladungsstützeinrichtung (2, 102) jeweils in einen bzw. aus einem Verriegelungseingriff zu gelangen.

2. Ladungsstützeinrichtung (2) nach Anspruch 1, **dadurch gekennzeichnet, dass** die Verriegelungsvorrichtungen (15, 16, 17) so angeordnet sind, dass sie durch Absenken in einer Richtung (18) zu dem Ladungsdeck (9) hin und durch Absetzen der Ladungsstützeinrichtung (2) darauf dazu gebracht werden, mit einer zugeordneten, darunter liegenden Verriegelungsaufnahmeöffnung (11) automatisch in Verriegelungseingriff zu gelangen, und dass sie in Verbindung mit der Anwendung einer Hebewirkung auf dem Ladungsdeck (2) aus dem Verriegelungseingriff mit der zugeordneten, darunter liegenden Verriegelungsaufnahmeöffnung (11) gelangen.

3. Ladungsstützeinrichtung (2) nach Anspruch 2, **dadurch gekennzeichnet, dass** die Verriegelungsvorrichtungen (15, 16, 17) durch drehbar angebrachte Klauen (25) ausgebildet sind, um mit einem Verriegelungsanschlag (26), der sich um die zugeordnete, darunter liegende Verriegelungsaufnahmeöffnung (11) herum erstreckt, einen Verriegelungseingriff zu erlangen.

4. Ladungsstützeinrichtung (2) nach Anspruch 3, **dadurch gekennzeichnet, dass** jede Klaue (25) eine Aussparung (27) umfasst, die ausgebildet ist, um eine Kante (26A) der Verriegelungsklinke (26) aufzunehmen.

5. Ladungsstützeinrichtung (2) nach einem der Ansprüche 2 bis 4, **dadurch gekennzeichnet, dass** sie ein Gestell (29) und einen äußeren Stützteil (28) aufweist, wobei das Gestell (29) relativ zu dem äußeren Stützteil (28) getrennt bewegbar ist, um die Verriegelungsvorrichtungen gemeinsam (15, 16, 17) in der verriegelten Stellung zu verriegeln, und dann wieder so angeordnet ist, um durch eine Verbindungsscheibe (7) oder irgendeinen anderen Teil des Nutzfahrzeugs (8) betätigt werden zu können, wenn das Nutzfahrzeug (8) unter der Ladungsstützeinrichtung (2) eintritt.

6. Ladungsstützeinrichtung (2) nach Anspruch 5, **dadurch gekennzeichnet, dass** das Gestell (29) so angeordnet ist, dass es manuell mittels eines Hebewerkzeugs, zum Beispiel ein Hebelarm in Form einer Brechstange, betätigt werden kann, um es in einer Richtung (32) von dem Ladungsdeck (9) weg aufzurichten.

7. Ladungsstützeinrichtung (2) nach Anspruch 5 oder Anspruch 6, **dadurch gekennzeichnet, dass** das Gestell (29) eine Schiene (33) zum gemeinsamen Verriegeln der Verriegelungsvorrichtungen (15, 16, 17) in der verriegelten Stellung aufweist.

8. Ladungsstützeinrichtung (2) nach einem der Ansprüche 5 bis 7, **dadurch gekennzeichnet, dass** sie pflockähnliche untere Eckteile (23) aufweist, die sich in Richtung nach unten (18) verjüngen und mit den Verriegelungsaufnahmeöffnungen (11, 12, 13, 14) zusammenpassen.

9. Ladungsstützeinrichtung nach Anspruch 8, **dadurch gekennzeichnet, dass** die Verriegelungsvorrichtungen (15, 16, 17) wechselseitig gegenüberliegend in jedem unteren Eckteil (23) angeordnet sind.

10. Ladungsstützeinrichtung (2) nach Anspruch 1, **dadurch gekennzeichnet, dass** sie einen Federmechanismus (153) aufweist zum Betätigen der Verriegelungsvorrichtungen (150) durch Federkraft (151) in einen verriegelten Eingriff mit zugeordneten, darunter liegenden Verriegelungsaufnahmeöffnungen (152) bei Betätigung, und zum Trennen der Verriegelungsvorrichtungen aus dem Verriegelungseingriff bei Freigabe, wobei der Federmechanismus wiederum so angeordnet ist, um durch eine Verbindungsscheibe (7) oder irgendeinen anderen Teil des Nutzfahrzeugs (8) betätigt werden zu können, wenn sich das Nutzfahrzeug aus der Ladungsstützeinrichtung (102) heraus bewegt oder von dem Federmechanismus (153) in irgendeiner anderen Weise entfernt wird, und um gelöst zu werden, wenn das Nutzfahrzeug den Federmechanismus (153) in der Ladungsstützeinrichtung (102) erreicht.

## Revendications

1. Support d'un chargement (2, 102) pour une remorque (3) comprenant des moyens de connexion (4, 6) pour la fixation désolidarisable du support d'un chargement (2, 102) au véhicule de transport (8) et à la remorque (3), des moyens de verrouillage (15, 16, 17, 150) pour le verrouillage à désengagement du support d'un chargement dans des logements de verrouillage (11, 12, 13, 14, 152) prévus sur le pont de chargement (9) d'un navire, **caractérisé en ce que** les moyens de verrouillage (15, 16, 17, 150) sont prévus de manière à pouvoir venir en engagement de verrouillage avec le pont de chargement (9) et à pouvoir en sortir respectivement par l'interaction entre le véhicule de transport (8) et le support d'un chargement (2, 102).

2. Support d'un chargement (2) selon la revendication 1, **caractérisé en ce que** les moyens de verrouillage (15, 16, 17) sont prévus de manière à ce qu'en abaissant le support d'un chargement (2) dans une direction (18) et en le déposant sur le pont de chargement, ils viennent automatiquement en engagement de verrouillage avec un logement de verrouillage sous-jacent correspondant (11), et de manière à ce que, en combinaison avec l'application d'un effet de levage sur le support d'un chargement (2), ils se désengagent du verrouillage avec le logement de verrouillage sous-jacent correspondant (11).

3. Support d'un chargement (2) selon la revendication 2, **caractérisé en ce que** les moyens de verrouillage (15, 16, 17) sont formés par des mâchoires (25) montées pivotantes de manière à obtenir un engagement de verrouillage avec une butée de verrouillage (26) s'étendant autour du logement de verrouillage sous-jacent correspondant (11).

4. Support d'un chargement (2) selon la revendication 3, **caractérisé en ce que** chaque mâchoire (25) présente une gorge (27) prévue pour recevoir un rebord (26a) de la butée de verrouillage (26).

5. Support d'un chargement (2) selon l'une quelconque des revendications 2 à 4, **caractérisé en ce qu'**il comprend un châssis (29) et une pièce de support externe (28), le châssis (29) étant déplaçable séparément par rapport à la pièce de support externe (28) pour verrouiller conjointement les moyens de verrouillage (15, 16, 17) en position de verrouillage, et étant à son tour prévu pour pouvoir être actionné par une sellette d'attelage (7) ou une autre partie du véhicule de transport (8) lorsque le véhicule de transport (8) passe sous le support d'un chargement (2).

6. Support d'un chargement (2) selon la revendication 5, **caractérisé en ce que** le châssis (29) est prévu de manière à pouvoir être actionné manuellement au moyen d'un outil de levage, par exemple au moyen d'un bras de levage sous la forme d'un pied-de-biche, pour le soulever dans une direction (32) en éloignement du pont de chargement (9).

7. Support d'un chargement (2) selon la revendication 5 ou 6, **caractérisé en ce que** le châssis (29) comprend une barre (33) pour verrouiller conjointement les moyens de verrouillage (15, 16, 17) en position de verrouillage.

8. Support d'un chargement (2) selon l'une quelconque des revendications 5 à 7, **caractérisé en ce qu'**il présente des pièces inférieures de coin (23) de type broche s'effilant vers le bas (18) et correspondent aux ouvertures servant de logement de verrouillage (11, 12, 13, 14).

9. Support d'un chargement (2) selon la revendication 8, **caractérisé en ce que** les moyens de verrouillage (15, 16, 17) sont prévus en vis-à-vis dans chaque pièce inférieure de coin (23).

10. Support d'un chargement (2) selon la revendication 1, **caractérisé en ce qu'**il comprend un mécanisme à ressort (153) pour actionner les moyens de verrouillage (150) par une force élastique (151) en engagement de verrouillage avec les ouvertures servant de logements de verrouillage (152), lorsque celui-ci est sollicité, et pour désaccoupler les moyens de verrouillage de leur engagement de verrouillage lorsque libéré, le mécanisme à ressort étant à son tour prévu pour pouvoir être actionné par une sellette d'attelage (7) ou une autre partie du véhicule de transport (8) lorsque le véhicule de transport (8) passe sous le support d'un chargement (2) ou est retiré du mécanisme ressort (153) d'une autre manière, et pour être libéré lorsque le véhicule de transport atteint le mécanisme à ressort (153) dans le support d'un chargement (102).
